# EUROPEAN PATENT SPECIFICATION

(11) **EP 1 788 277 B1**
(45) Date of publication and mention of the grant of the patent: **18.11.2009**
(21) Application number: 06124381.2
(22) Date of filing: 20.11.2006
(51) Int. Cl.: F16F 15/08, G01P 1/02

(54) **Isolation system for an inertial measurement unit**
Isolierungssystem für Trägheitsmesseinheit
Système d'isolation pour une unité de mesure inertielle

(30) Priority: 18.11.2005 US 164355
(43) Date of publication of application: 23.05.2007
(73) Proprietor: Honeywell International Inc., Morristown NJ 07960 (US)
(72) Inventor: Braman, Todd L., New Brighton, MN 55112 (US); Hagenson, Dale J., Wyoming, MN 55092 (US)
(74) Representative: Haley, Stephen

(56) References cited:
- WO-A-98/55832
- FR-A- 663 418
- US-A- 3 714 831
- US-A- 3 843 108
- US-A- 4 494 072
- US-A- 5 237 871
- US-A1- 2002 158 390

## Description

The present invention relates generally to inertial measurement units (IMUs) and more particularly to attenuating shock and vibrational energy using an IMU isolator.

In certain environments, it may be necessary to isolate mechanically sensitive assemblies from shock, vibrational, and acoustic energy. In many applications, this may be accomplished by placing the sensitive components within some form of container or housing, The need to isolate a device from shock, vibrational, and/or acoustic energy may be particularly acute when the device is an inertial sensor assembly (ISA), which may include a sensor suite of an inertial measurement unit (IMU), An ISA typically includes inertial sensors that detect acceleration and/or rotation in three axes. Usually, three accelerometers and three rotational rate sensors are arranged with their input axes in a perpendicular relationship. The sensors may generally be rigidly and precisely mounted within an ISA housing along with related electronics and hardware. Commonly, the housing of the ISA may be mounted to a container of the IMU, and the IMU may be rigidly and precisely mounted to a frame of a vehicle, such as an aircraft, missile, or other object.

Some applications expose the IMU to extremely high dynamic environments, such as ballistic applications wherein a projectile including an IMU may be fired from a gun. Traditionally, the inertial sensors were protected to some degree from relatively low level shock and vibration through the use of vibration isolators. However, such extremely high dynamic environments demand a smaller, lighter, and more durable mechanism to withstand the high acceleration, such as 20,000 g's, associated with these environments. Therefore, it may be desirable to provide a mechanism, particularly a vibration isolator, to attenuate shock and vibrational energy and having integrated features providing protection for the inertial sensors in these high dynamic applications, such as ballistic applications, to increase the performance and reliability of the inertial sensor system.

The following summary of the invention is provided to facilitate an understanding of some of the innovative features unique to the present invention and is not intended to be a full description. A full appreciation of the invention can be gained by taking the entire specification, claims, drawings, and abstract as a whole.

The present invention relates generally to inertial measurement units (IMUs) and more particularly to an IMU isolator for attenuating shock and vibrational energy. See US-A-2002158390 and WO-A-9855832 for examples.

According to the present invention there is provided an isolator for an inertial measurement unit (IMU), comprising:
a rigid outer ring, arranged to be attached, to a support member of the IMU, the outer ring having an inner surface with at least one protruding portion;
a rigid inner ring, arranged to be attached, to a sensor suite of the IMU, the inner ring having an outer surface adjacent the inner surface of the outer ring, the outer surface of the inner ring having at least one recessed portion; and
an elastomer positioned between at least a portion of the outer ring and at least a portion of the inner ring,
wherein the protruding portion is positioned at least partially within the recessed portion; and
wherein the protruding portion has at least one side surface and the recessed portion has at least one side surface, the side surfaces being interlockable to engage to limit rotation of the inner ring relative to the outer ring.

The protruding portion is positioned at least partially within the recessed portion and may be interlocking to prevent excessive rotation of the inner ring relative to the outer ring when the IMU experiences a high rotational force.

Furthermore, the illustrative IMU may include a sensor suite attached to the inner ring, the sensor suite having at least one inertial sensor, and a cover member and a base member attached to the outer ring forming a cavity for the sensor suite, the cavity defined by cavity walls.

In some cases, the elastomer may be positioned between at least one side surface of the recessed portion and at least one side surface of the protruding portion. However, in other cases, the elastomer may not be positioned between at least one side surface of the recessed portion and at least one side surface of the protruding portion.

In another illustrative example, an isolator for an inertial measurement unit (IMU) might include an outer ring having an inner surface, an inner ring having an outer surface adjacent the inner surface of the outer ring, and an elastomer situated therebetween, the elastomer covering substantially the entire height of at least a portion of the inner surface of the outer ring and substantially the entire height of at least a portion of the outer surface of the inner ring providing an elastomer-to-elastomer contact should the outer surface of the inner ring attempt to engage the inner surface of the outer ring during a shock event. In some cases, the elastomer may extend between the outer ring and the inner ring and may have a top gap and a bottom gap between the inner ring and the outer ring.

In another illustrative embodiment, an isolator for an inertial measurement unit (IMU) might include an outer ring having an inner surface with a recessed portion and an inner ring having an outer surface adjacent the inner surface of the outer ring, the outer surface having a protruding portion. The protruding portion may be interlocked with the recessed portion by positioning the protruding portion at least partially within the recessed portion to prevent excessive rotation of the inner ring relative to the outer ring when a rotational force is experienced and an elastomer may be positioned between at least a portion of the outer ring and at least a portion of the inner ring.

In the Drawings;
Figure 1 is a perspective view of an illustrative inertial measurement unit (IMU) in accordance with the present invention;
Figure 1A is a perspective assembly view of the illustrative IMU in Figure 1;
Figure 2 is a perspective view of the illustrative IMU isolator in Figure 1;
Figure 3 is a perspective assembly view of the illustrative IMU isolator of Figure 2;
Figure 4 is a perspective view of the illustrative rotational stop mechanism of the IMU isolator of Figure 2;
Figure 5 is a perspective view of another illustrative rotational stop mechanism of the IMU isolator of Figure 2; and
Figure 6 is a schematic diagram of a cross-sectional view of the illustrative IMU isolator of Figure 2.

The following description should be read with reference to the drawings
wherein like reference numerals indicate like elements throughout the several views. The detailed description and drawings show several embodiments which are meant to be illustrative of the claimed invention.

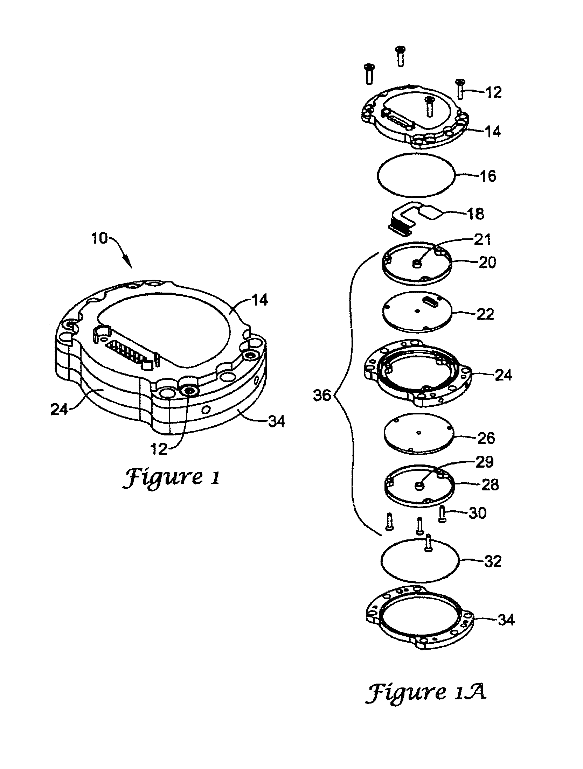

Figure 1 is a perspective view of an illustrative inertial measurement unit (IMU) 10 in accordance with the present invention. The illustrative IMU 10 is designed to help decrease the shock, vibrational, and/or acoustic energy transmitted to the inertial sensors contained in the IMU 10 and may include self-snubbing features when exposed to high dynamic environments, including, for example, gun launches greater than 20,000 g's, to protect the inertial sensors. Additionally, the illustrative IMU 10 may be able to withstand higher g-forces than conventional IMUs due to its smaller and lighter weight design. That is, the forces realized on the IMU is directly related to the mass of the IMU, thus the smaller size and lighter weight may help improve the illustrative IMU's 10 performance and durability in these high dynamic environments by decreasing the g-force exerted on the IMU 10. Additionally, the illustrative IMU 10 may also have a relatively low production costs.

The illustrative IMU 10 includes a container, which includes a cover member 14 and a base member 34 forming a cavity defined by the cavity walls. The container may also include an isolator 24 situated between the cover member 14 and the base member 34. The isolator 24, in some cases, may define a portion of the cavity walls of the cavity. The cover member 14, base member 34, and isolator 24 may be secured together using one or more fasteners 12, such as, for example bolts or screws 12. The illustrative embodiment may include four screws 12 to secure the cover member 14, base member 34, and isolator 24 together. However, it is contemplated, that any number of fasteners 12, or any method of securing the cover member 14, base member 34, and isolator 24 together may be used, as desired. The container may be used to help mechanically isolate a sensor suite, which may be contained inside the container, from shock, vibration, and/or acoustic energy. In some embodiments, the container may be secured to a projectile, which can be shot from a gun.

Figure A is a perspective assembly view of the illustrative IMU 10 in Figure 1. In the illustrative embodiment, the cover member 14, the isolator 24, and the base member 34, which form the container of the IMU 10, are shown in an exploded view. The illustrative embodiment may also include a first o-ring seal 16 or gasket situated between the cover member 14 and the isolator 24. Additionally, a second o-ring seal 32 or gasket may be situated between the isolator 24 and the base member 34.

The illustrative embodiment may also include a sensor suite 36, for example, an inertial sensor assembly (ISA), situated in the cavity of the container. The illustrative sensor suite 36 may measure acceleration and/or rotation in three planes. The container may provide protection for the sensor suite 36. in the illustrative embodiment, the sensor suite 36 is attached to a portion of the isolator 24 in the cavity. The isolator 24 may help attenuate shock and vibrational energy at the sensor suite 36.

The illustrative sensor suite 36 may include one or more inertial sensors, such as, for example, a MEMS gyroscope or a MEMS accelerometer. The one or more inertial sensors may be included in one or more printed wiring assemblies (PWAs) 22 and 26. ln the illustrative embodiment, the sensor suite includes two PWA 22 and 26. A first PWA 22 is situated above the isolator 24 and a second PWA 26 is situated below the isolator 24. In the illustrative embodiment, the first PWA 22 has a processor mounted thereon that may provide electronic circuitry and control for the IMU 10. in some cases, the processor may be a microprocessor. Additionally or alternatively, the first PWA 22 may have an inertial sensor, such as a MEMS gyroscope or MEMS accelerometer, situated thereon. The second PWA 26 has an inertial sensor, such as a MEMS gyroscope or MEMS accelerometer, situated thereon. However, it is also contemplated, that a processor may be situated on the second PWA 26 and the inertial sensor situated on the first PWA 22, as desired. Furthermore, it is also contemplated that the sensor suite 36 may include any number of PWAs 22 and 26 with any suitable device or component mounted thereon, depending on the desired application.

The illustrative sensor suite 36 may also include one or more support members 20,28. In some cases, the one or more support members 20, 28 may include a support ring and/or a center support. In some cases, the center support 21 and 29 may be a washer. In the illustrative embodiment, there is a first support member 20, including a support ring and a center support 21, situated above the first PWA 22, and second support member 28, including a support ring and a center support 29, situated below second PWA 26. The first support member 20 and the second support member 28 may be adapted to secure the sensor suite 36 together as well as secure the sensor suite 36 to the isolator 24. The support members 20, 28 may include one or more holes for one or more fasteners 30, such as bolts or screws 30. Additionally, the isolator 24 may be adapted to secure the sensor suite 36 thereto by providing one or more holes for the one or more fasteners 30. In the illustrative embodiment, there may be three screws 30 for securing the support rings to the isolator 24 and one screw 30 to secure the center supports, 21 and 29. However, it is contemplated that any number of fasteners 30 may be used, as desired.

Furthermore, the illustrative embodiment may include an input/output connector 18 "flextape" adjacent the sensor suite 36 and the cover member 14. In some cases, a portion of the connector 18 may be coupled to the sensor suite 36.
Additionally, in some cases, a portion of the connector 18 may extend through an opening in the cover member 14 and may provide or receive inertial data externally of the IMU 10.

The illustrative IMU 10 may provide inertial data, such as linear and angular acceleration information, about the movement of the IMU 10. The data may provide information relating to the flight and control of the IMU 10 to a navigational computer. In some cases, the IMU 10 may provide guidance information about the flight of a projectile. In other cases, the IMU 10 may provide information relating to the flight of an aircraft. More generally, the IMU 10 may be used to provide data relating to any movable object, as desired.

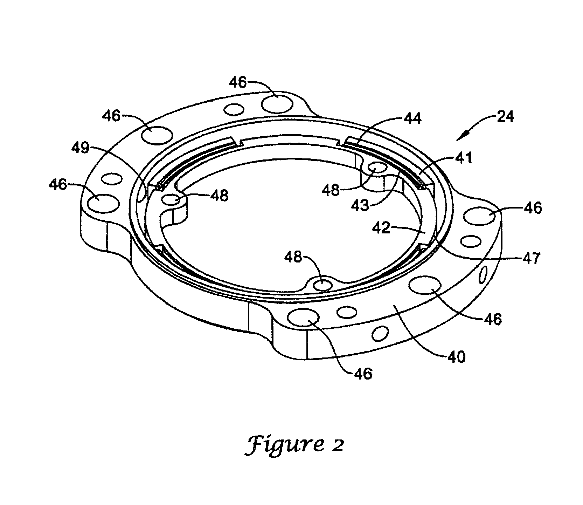

Figure 2 is a perspective view of the illustrative IMU isolator 24 in Figure 1.
The illustrative IMU isolator 24 may include an inner ring 42 having an outer surface 47, and an outer ring 40 having an inner surface 49 situated adjacent the outer surface 47 of the inner ring 42. The IMU isolator 24 may also include an elastomer 44 provided between at least a portion of the inner ring 42 and at least a portion of the outer ring 40. in some cases, the elastomer 44 may be a silicone rubber, however, it is contemplated that the elastomer 44 may be any material that may absorb energy and that may dampen vibration and shock during normal operation and during the impact between the inner ring 42 and outer ring 40.

The illustrative inner ring 42 and outer ring 40 may be adapted to provide a rotation stop mechanism, such as interlocking portions, which may help prevent the inner ring 42 from excessively rotating relative to the outer ring 40. This may help protect the elastomer during high dynamic events. That is, the rotation stop mechanism may help prevent the inner ring 42 from "spinning out" of the outer ring 40 and tearing the elastomer 44 when exposed to high dynamic environments.

The illustrative rotational stop mechanism may include a recessed portion 43 and a protruding portion 41. In the illustrative embodiment, the inner ring 42 has an outer surface that may be designed to have at least one recessed portion 43. The outer ring 40 may be designed and machined to have an inner surface with at least one protruding portion 41 corresponding to the at least one recessed portion 43 of the inner ring 42. Alternatively, it is contemplated that the inner ring 42 may have at least one protruding portion and the outer ring 40 may have at least one corresponding recessed portion. In either case, the protruding portion 41 may be positioned at least partially within the recessed portion 43 so that they are interlocking, which may inhibit or substantially inhibit excessive rotation of the inner ring 42 relative to the outer ring 40 when exposed to high rotational forces. Such high rotational forces may be provided by, for example, the "rifling" of a projectile that includes the IMU with the barrel of a gun or cannon. In the illustrative embodiment, there are four recessed portions 43 in the outer surface of the inner ring 42 and four corresponding protruding portions 41 in the inner surface of the outer ring 40. However, the use of four recessed portions 43 and protruding portions 41 is only illustrative and it is contemplated that any number of recessed portions 43 and protruding portions 41 may be used, as desired

The illustrative IMU isolator 24 inner ring 42 may be adapted to mount the sensor suite thereto and the IMU isolator 24 outer ring 40 may be adapted to secure the cover member and base member thereto. The illustrative inner ring 42 may be adapted to mount the sensor suite thereto by provide one or more holes 48 to facilitate the insertion of fasteners. In the illustrative embodiment, there are three holes 48 provided for fasteners. However, it is contemplated that any number of holes 48 may be used depending on the design of the sensor suite. Furthermore, the outer ring 40 may provide one or more holes 46 for securing the base member and cover member thereto. In the illustrative embodiment, there are six holes 46 provided. However, it is contemplated that any number of holes 46 may be provided to secure the base member and cover member to the outer ring 40, as desired. Furthermore, it is contemplated that any method of fastening or securing the sensor suite to the inner ring 42 and any method of fastening or securing the cover member and base member to the outer ring 40 may be used, as desired.

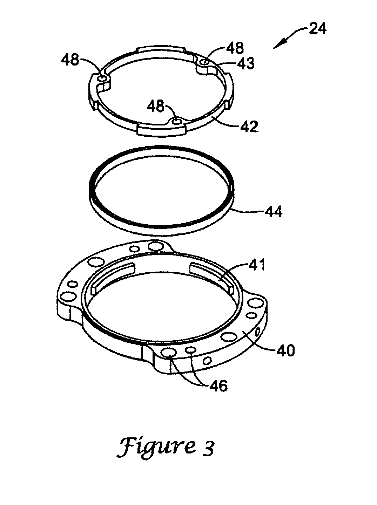

Figure 3 is a perspective assembly view of the illustrative IMU isolator 24 of Figure 2. The illustrative IMU isolator 24 assembly includes the inner ring 42, the elastomer 44, and the outer ring 40. The inner ring 42 and outer ring 40 may be designed to provide a recessed portion 43 and a protruding portion 41. Once the inner ring 42 and the outer ring 40 are machined, or otherwise formed, the inner ring 42 may be positioned within the outer ring 40. Next the elastomer 44 may be provided between at least a portion of the inner ring 42 and at least a portion of the outer ring 40. However, it is also contemplated that the elastomer 44 may be provided in the outer ring 40 before positioning the inner ring 42 in the outer ring 40, the elastomer 44 may be provided around the inner ring 42 before positioning the inner ring 42 and elastomer 44 in the outer ring 40, or the elastomer 44 may be positioned in the outer ring 40 at the same or substantially the same time that the inner ring 42 is positioned in the outer ring 40.

In some cases, the inner ring 42 and outer ring 40 may be placed in a mold in which the elastomer 44 may be applied. However, the elastomer 44 may be applied between the entire inner ring 42 and the entire outer ring 40 or between a portion of the inner ring 42 and a portion of the outer ring 40, as desired. In other cases, the elastomer 44 may be provided between the inner ring 42 and the outer ring 40 by spraying, coating, dipping, molding, or by any other suitable method as desired.

The illustrative IMU isolator 24 may have a temperature range of -55 degrees Celsius to 90 degrees Celsius. Over this temperature range, the IMU isolator 24 may have a natural frequency of about 260 hertz (Hz). The natural frequency temperature variation may have a range of 50 Hz. In one case, the IMU isolator 24 may have a natural frequency of 225 Hz with an allowable range of 35 Hz over the temperature range. The illustrative IMU isolator 24 may also have a transmissibility that ranges from 3.0 to 7.0 over the temperature range. However, it is contemplated that any suitable temperature range, frequency, or transmissibility may be used, depending on the application.

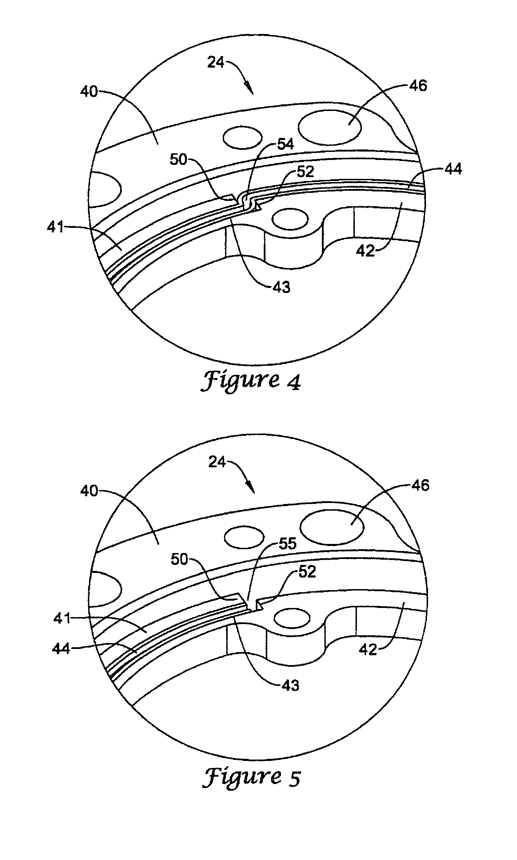

Figure 4 is a perspective view of the illustrative rotational stop mechanism of the IMU isolator 24 of Figure 2. The illustrative rotational stop mechanism includes the recessed portion 43 of the outer surface of the inner ring 42 and the protruding portion 41 of the inner surface of the outer ring 40. The recessed portion 43 and the protruding portion 41 may be situated so that the protruding portion 41 is at least partially within the recessed portion 43. With such an alignment, the side surface 52 of the recessed portion 43 of the inner ring 42 may come into contact with the side surface 50 of the protruding portion 41 of the outer ring 40 when the IMU isolator 24 experiences a significant rotational force. The illustrative rotation stop mechanism may cause the inner ring 42 and outer ring 40 to interlock, preventing or substantially preventing rotation of the inner ring 42 relative to the outer ring 40.

In some cases, to help improve the interlocking of the inner ring 42 with the outer ring 40, the side surface 52 of the recessed portion 43 may recede at an angle of 90 degrees. The side surface 50 of the protruding portion 41 may be protruding at an angle similar to that of the recessed portion 43, in this case, 90 degrees. Additionally, in some cases, the side surface 52 of the recessed portion 43 may be recessed at an angle greater than 90 degrees. The side surface 50 of the protruding portion may also protrude at a corresponding angle. However, it is contemplated that the side surface 52 of the recessed portion 43 and the side surface 50 of the protruding portion 41 may have any suitable angle greater than or less than 90 degrees, as desired.

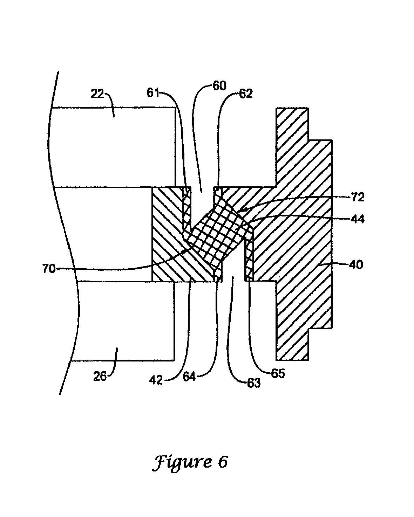

As illustrated, the elastomer 44 may be positioned between a portion of the inner ring 42 and the outer ring 40, and in some cases, may be adjacent to the side surface 52 of the recessed portion 43 and the side surface 50 of the protruding portion 41, shown in region 54. The elastomer 44 may, for example, be provided in region 54 to help attenuate the shock and vibrational energy when the IMU isolator 24 bottoms out during a high rotational event. In this case, there is an elastomer-to-elastomer contact between the inner ring 42 and the outer ring 40. However, it is also contemplated that the elastomer 44 may be provided only on one surface causing an elastomer-to-metal contact or on no surface, as illustrated in Figure 6, having a metal-to-metal contact. One advantage of providing elastomer 44 on at least one surface 50 or 52 may be the increased attenuation of shock and vibrational energy in the sensor suite of the IMU during a high rotational event.

Figure 5 is a perspective view of another illustrative rotational stop mechanism of the IMU isolator 24 of Figure 2. Similar to Figure 4, the illustrative IMU isolator 24 has a rotational stop mechanism that includes the recessed portion 43 of the inner ring 42 and the protruding portion 41 of the outer ring 40. The recessed portion 43 and the protruding portion 41 may be positioned so that the protruding portion 41 is at least partially within the recessed portion 43. In such an alignment, the side surface 52 of the recessed portion 43 of the inner ring 42 may come into contact with the side surface 50 of the protruding portion 41 of the outer ring 40, preventing or substantially preventing excessive rotation of the inner ring 42 relative to the outer ring 40 during a high rotational event.

However, in some cases, the elastomer 44 is not provided between the side surface 52 of the recessed portion 43 and the side surface 50 of the protruding portion 41, shown in region 55. Two reasons for not providing the elastomer 44 in region 55 may be the design constraints and the increased cost. When no elastomer 44 is provided, the side surface 52 of the recessed portion 43 and the side surface 50 of the protruding portion 41 may come into contact as a metal-to-metal contact when the illustrative IMU isolator 24 is exposed to high rotation forces. However, a metal-to-metal contact may produce a reduced attenuation of shock and vibrational energy in the senor suite during such events, as compared to Figure 4.

More generally, it is contemplated that elastomer 44 may be provided on both the side surface 50 and 52 of the recessed portion 43 and the protruding portion 41, on only the side surface 52 of the recessed portion 43, on only the side surface 50 of the protruding portion 41, or not provided at all between the side surfaces 50, 52 of the recessed portion 43 and protruding portion 41, as desired.

Figure 6 is a schematic diagram of a cross-sectional view of the illustrative IMU isolator of Figure 2. The illustrative IMU isolator includes inner ring 42, outer ring 40, and elastomer 44 extending therebetween. The illustrative elastomer 44 may be disposed over the entire height of the inner ring 42 and the entire height of the outer ring 40, if desired. The elastomer has a top gap 60 and a bottom gap 63. Under some circumstances, the IMU isolator may be exposed to translational forces causing a compression between the inner ring 42 and the outer ring 40. Under this compression, elastomer area 61 on the inner ring 42 may come into contact with elastomer area 62 on the outer ring 40. Likewise, elastomer area 64 on the inner ring 42 may come into contact with elastomer area 65 on the outer ring 40. One advantage of having full surface coverage may be to help prevent a metal-to-metal or metal-to-elastomer contact. An elastomer-to-elastomer contact may have a higher attenuation of shock and vibrational energy, which may be advantageous when operating in high dynamic environments. However, it is also contemplated that the elastomer 44 may provide full surface coverage only on either the inner ring 42, such as areas 61 and 64, or only on the outer ring 40, such as areas 62 and 65 or on neither the inner or outer rings, as desired.

Furthermore, the inner surface 72 of the outer ring 40 may be similarly shaped to the outer surface 70 of the inner ring 42 and not have any pointed regions. One advantage of a non-pointed region is that when exposed to translational forces that cause a compression of the inner ring 42 and outer ring 40, a non-pointed region may spread out the force over the entire surface area of the inner ring 42 and the outer ring 40 and may not cause the elastomer 44 to tear or cut, whereas a pointed region may centralize the force in one point and cause the elastomer 44 to tear or cut, resulting in a metal-to-metal contact.

Additionally, the illustrative elastomer 44 may be symmetrical or nearly symmetrical in shape in the isolator. The symmetrical shape may provide an advantage of having the elastic center of the elastomer 44 at the geometric center of the isolator similarly located. Furthermore, the elastomer 44 may balance the axial and radial stiffness of the isolator at a ratio of approximately 1:1. Moreover, in some cases, the elastomer 44 may have a linear spring rate over an expected deflection range associated with shock and vibrational energy during a high dynamic event. In one case, the expected deflection range may be approximately 0.0076 cm (0.003 inches). However, it is contemplated that the elastomer 44 may have a linear spring rate or stiffness up to a deflection of approximately 0.0356 cm (0.014 inches) in the radial direction and an even greater deflection range in the axial direction.

The illustrative isolator may provide protection and/or attenuation of the inertial sensors in all six degrees of freedom, such as the longitudinal, lateral, axial, roll, pitch, and yaw degrees of freedom. In some cases, the illustrative elastomer 44 may provide the protection and/or attenuation of the inertial sensor in three degrees of freedom, such as, for example, the longitudinal, lateral, and the axial degrees of freedom.

Having thus described the preferred embodiments of the present invention, those of skill in the art will readily appreciate that yet other embodiments may be made and used within the scope of the claims hereto attached. Numerous advantages of the invention covered by this document have been set forth in the foregoing description. It will be understood, however, that this disclosure is, in many respect, only illustrative. Changes may be made in details, particularly in matters of shape, size, and arrangement of parts without exceeding the scope of the invention. The invention's scope is, of course, defined in the language in which the appended claims are expressed.

## Claims

1. An isolator for an inertial measurement unit (IMU), comprising:
a rigid outer ring (40), arranged to be attached, to a support member of the IMU, the outer ring having an inner surface (72) with at least one protruding portion (41);
a rigid inner ring (42), arranged to be attached, to a sensor suite of the IMU, the inner ring having an outer surface (70) adjacent the inner surface (72) of the outer ring (40), the outer surface (70) of the inner ring (42) having at least one recessed portion (43); and
an elastomer (44) positioned between at least a portion of the outer ring (40) and at least a portion of the inner ring (42),
wherein the protruding portion (41) is positioned at least partially within the recessed portion (43); and
wherein the protruding portion (41) has at least one side surface (50) and the recessed portion (43) has at least one side surface (52), the side surfaces (50, 52) being interlockable to limit rotation of the inner ring (42) relative to the outer ring (40).

2. The isolator of claim 1, wherein the elastomer (44) is positioned between the at least one side surface (52) of the recessed portion (43) and the at least one side surface (50) of the protruding portion (41).

3. The isolator of claim 1, wherein the elastomer (44) is not positioned between the at least one side surface (52) of the recessed portion (43) and the at least one side surface (50) of the protruding portion (41).

4. The isolator of any preceding claim, wherein the sensor suite has at least one inertial sensor.

5. The isolator of claim 4, further comprising a cover member (14) and a base member (34) attached to the outer ring (40), thereby forming a cavity for the sensor suite, the cavity defined by cavity walls.

## Patentansprüche

1. Isolator für eine Trägheitsmesseinheit (IMU), der Folgendes umfasst:
einen starren äußeren Ring (40) zur Befestigung an einem Stützelement der IMU, wobei der äußere Ring eine innere Oberfläche (72) mit mindestens einem vorspringenden Abschnitt (41) aufweist;
einen starren inneren Ring (42) zur Befestigung an einer Sensorenreihe der IMU, wobei der innere Ring eine an die innere Oberfläche (72) des äußeren Rings (40) angrenzende äußere Oberfläche (70) aufweist, wobei die äußere Oberfläche (70) des inneren Rings (42) mindestens einen rückspringenden Abschnitt (43) aufweist; und
ein Elastomer (44), das zwischen mindestens einem Abschnitt des äußeren Rings (40) und mindestens einem Abschnitt des inneren Rings (42) positioniert ist,
wobei der vorspringende Abschnitt (41) mindestens teilweise innerhalb des rückspringenden Abschnitts (43) positioniert ist; und
wobei der vorspringende Abschnitt (41) mindestens eine Seitenoberfläche (50) und der rückspringende Abschnitt (43) mindestens eine Seitenoberfläche (52) aufweist,
wobei die Seitenoberflächen (50, 52) verriegelbar sind, um eine Drehung des inneren Rings (42) im Verhältnis zum äußeren Ring (40) zu begrenzen.

2. Isolator nach Anspruch 1, bei dem das Elastomer (44) zwischen der mindestens einen Seitenoberfläche (52) des rückspringenden Abschnitts (43) und der mindestens einen Seitenoberfläche (50) des vorspringenden Abschnitts (41) positioniert ist.

3. Isolator nach Anspruch 1, bei dem das Elastomer (44) nicht zwischen der mindestens einen Seitenoberfläche (52) des rückspringenden Abschnitts (43) und der mindestens einen Seitenoberfläche (50) des vorspringenden Abschnitts (41) positioniert ist.

4. Isolator nach einem der vorstehend aufgeführten Ansprüche, bei dem die Sensorenreihe mindestens einen Trägheitssensor aufweist.

5. Isolator nach Anspruch 4, der weiterhin ein Abdeckelement (14) und ein Basiselement (34), die am äußeren Ring (40) befestigt sind, umfasst, so dass **dadurch** ein Hohlraum für die Sensorenreihe entsteht,
wobei der Hohlraum durch Hohlraumwände definiert ist.

## Revendications

1. Isolateur pour une unité de mesure inertielle (IMU), comprenant:
un anneau extérieur rigide (40) agencé de manière à être attaché à un élément de support de l'IMU, l'anneau extérieur présentant une surface intérieure (72) comportant au moins une partie saillante (41);
un anneau intérieur rigide (42) agencé de manière à être attaché à une succession de capteurs de l'IMU, l'anneau intérieur présentant une surface extérieure (70) adjacente à la surface intérieure (72) de l'anneau extérieur (40), la surface extérieure (70) de l'anneau intérieur (42) comportant au moins une partie évidée (43); et
un élastomère (44) positionné entre au moins une partie de l'anneau extérieur (40) et au moins une partie de l'anneau intérieur (42),
dans lequel la partie saillante (41) est positionnée au moins partiellement à l'intérieur de la partie évidée (43); et
dans lequel la partie saillante (41) présente au moins une surface latérale (50), et la partie évidée (43) présente au moins une surface latérale (52), les surfaces latérales (50, 52) pouvant être verrouillées l'une avec l'autre de manière à limiter la rotation de l'anneau intérieur (42) par rapport à l'anneau extérieur (40).

2. Isolateur selon la revendication 1, dans lequel l'élastomère (44) est positionné entre ladite au moins une surface latérale (52) de la partie évidée (43) et ladite au moins une surface latérale (50) de la partie saillante (41).

3. Isolateur selon la revendication 1, dans lequel l'élastomère (44) n'est pas positionné entre ladite au moins une surface latérale (52) de la partie évidée (43) et ladite au moins une surface latérale (50) de la partie saillante (41).

4. Isolateur selon l'une quelconque des revendications précédentes, dans lequel la succession de capteurs comprend au moins un capteur inertiel.

5. Isolateur selon la revendication 4, comprenant en outre un élément de couvercle (14) et un élément de base (34) attachés à l'anneau extérieur (40), formant de ce fait une cavité pour la succession de capteurs, la cavité étant définie par des parois de cavité.
